Europäisches Patentamt

European Patent Office

Office européen des brevets

(11) Publication number: **0 101 102**
**B1**

# (12) EUROPEAN PATENT SPECIFICATION

(45) Date of publication of patent specification: **06.04.88**

(51) Int. Cl.⁴: **A 23 B 7/14,** A 23 K 3/00

(21) Application number: **83200856.9**

(22) Date of filing: **13.06.83**

(54) **Preventing fungal decay of food products, particularly harvested fruits.**

(30) Priority: **21.07.82 GB 8221143**
**19.05.83 GB 8313813**

(43) Date of publication of application:
**22.02.84 Bulletin 84/08**

(45) Publication of the grant of the patent:
**06.04.88 Bulletin 88/14**

(84) Designated Contracting States:
**AT BE CH DE FR GB IT LI NL SE**

(56) References cited:
**GB-A-1 071 421**
**US-A-2 858 225**

**CITROGRAPH, June 1982, pages 187-188; "Film
wrapping for citrus finds new followers"
JOURNAL OF THE AMERICAN SOCIETY FOR
HORTICULTURAL SCIENCE, vol. 104, no. 6,
1979, pages 868-872; S.BEN-YEHOSHUA et al.:
"Some Physiological effects of delaying
deterioration of citrus fruits by individual seal
packaging in high density polyethylene film"**

(73) Proprietor: **JANSSEN PHARMACEUTICA N.V.
Turnhoutsebaan 30
B-2340 Beerse (BE)**

(72) Inventor: **Van Gestel, Jozef Frans Elisabetha
Renier Snniederspad 9
N-2350 Vosselaar (BE)**
Inventor: **Duytschaever, Benedikt Domien Maria
St. Lucaslaan 27
B-2070 Ekeren (BE)**

(56) References cited:
**CHEMOTHERAPY, vol. 27, 1981, pages 270-276;
J. VAN GESTEL et al.: "Vapour phase activity of
Imazalil"**

**PESTICIDE SCIENCE, vol. 12, no. 5, October
1981, pages 485-490, Society of Chemical
Industry, Oxford, GB; SHIMSHON BEN-
YEHOSHUA et al.: "Decay control and fungicide
residues in citrus fruits seal-packed in a
high-density polyethylene film"**

## 0 101 102

### Description

One of the main objectives of those involved in the production and distribution of fruits is to keep these fruits for as long as possible intact and fresh. Apart from inherent biological processes, which lead to overripening, softening, discolouration, shrinking and deformation of fruits, microbiological deterioration remains one of the major problems.

Citrus fruits in particular are very sensitive to microbiological, mostly fungal attack, by such microorganisms as *Penicillium italicum* (blue mold) and *P. digitatum* (green mold), *Alternaria citri* (stem end rot) etc.. Other fruit decay causing fungi are for example *Gleosporium perennans*, *G. fructigenum*, *Penicillium expansum* etc.. The problem is further aggravated by the fact that the spores produced on a few individual fruits attacked by fungi rapidly spread themselves through part or all of the container or storage room, thereby leading in a short time to molding and deterioration of the whole lot.

Quite obviously, various measures are constantly being taken in order to prevent fungal decay of citrus and other fruits after harvest, the most important still being the use of various fungicides such as SOPP (sodium orthophenylphenate), benomyl, thiabendazole, 2-aminobutane and imazalil.

Of the above fungicidal substances, imazalil or 1-[2-(2,4-dichlorophenyl)-2-(2-propenyloxy)-ethyl]-1*H*-imidazole has proven particularly useful.

According to current practice, citrus fruits are prior to packing sprayed with or dipped into wax-like substances wherein appropriate fungicides have been incorporated. As a result of this treatment a thin fungicide containing wax-layer is left on the fruit peel. Apart from its antifungal effect, the wax-layer reduces transpiration of the fruits, thus preventing them from losing too quickly their fresh appearance.

Mutual contamination of the fruits may be further reduced, for example, by individually packaging the fruits, e.g. in paper wraps. Recently, use has been made also of polyethylene film for the individual packaging of fruits. In J. Amer. Soc. Hort. Sci., *104*, 868—872 (1979) and Proc. Int. Soc. Citriculture, 110—115 (1978), there is described a technique of seal-packaging citrus fruits in high density polyethylene film. While seal-packaging was found to extend the storage life of the fruit in general it was further found to change the population of pathogens by inhibiting molds and enhancing stem end rots. However, decay could be markedly reduced when the fruit was, prior to being packed, treated with fungicides. It was further suggested that the effect could be further amplified by impregnating the film with several volatile fungicides to be released during storage. Such volatile fungicides include e.g. diphenyl and 2-aminobutane.

In Citrograph, 187—188 (1982) there is made reference to incorporating imazalil in wrapping film at the time of extrusion. The vapour phase activity of imazalil has been described in Chemotherapy, *27*, 270—276 (1981). Although the compound has a very low vapour pressure (about $7 \times 10^{-8}$ mm Hg at 20°C) it was found to exert fungistatic, fungicidal and even sporocidal activity in the vapour phase against a wide variety of fungal species. The effect was most pronounced when the product was applied to non-absorbing materials. As a possible application of the vapour phase activity of imazalil the reference mentions the treatment of packing paper between citrus fruit against *Penicillium spp.*.

Although more or less satisfactory results have been obtained with some of the above techniques or combinations thereof, all of them still have their disadvantages. Processes which comprises a direct treatment of the fruit with fungicides, e.g. by wax-dipping or spraying are in general effective provided that an appropriate fungicide is used at a sufficient dose rate. Unfortunately the direct-treatment methods have the considerable disadvantage that often quite high concentrations of fungicides are left on the fruit peel. While most of these residues are effectively removed when the fruits are peeled they may present a major problem in certain circumstances. For example, the fruit peel may be used itself, as in the preparation of marmalades, or the unpeeled fruits may be squeezed to produce fruit juice. As most fungicides develop after a shorter or longer period of time a certain degree of resistance, gradually higher doses of the fungicide are needed, thus leading to increasing residue problems. From the residue point of view, those techniques are much more attractive wherein no fungicide is applied to the fruits themselves but rather to the packaging materials. Unfortunately, the results obtained with such techniques have been unsatisfactory thus far. In particular fungal decay was not effectively prevented when oranges were individually wrapped in both high and low density polyethylene films wherein up to 0.5% of imazalil had been incorporated.

It has now been found that harvested fruits, and in particular citrus fruits can be effectively protected from fungal decay by individually packaging said fruits in a film of an appropriate thermoplastic polymeric material wherein an effective amount of an appropriate fungicide is incorporated, on condition that during or shortly after packaging at least part of the packaging material is temporarily heated.

Without being bound by theory, it is assumed that by temporarily heating part or all of the packaging material during or shortly after packaging a sufficient amount of the fungicide is released almost immediately in the microatmosphere around the fruits in order to prevent fungal growth. Due to the subsequent spontaneous diffusion and evaporation of the fungicide from the packaging material, its concentration in the atmosphere surrounding the fruits remains at a sufficient level for a long period of time. Without heating, the spontaneous release of the fungicide is too slow to establish quickly a critical concentration of the fungicide in the atmosphere around the fruits.

As thermoplastic materials there may be used in the process according to the invention films of such

2

polymeric materials as are commonly used for packing food products, such as, for example, polyolefines, e.g. polyethylene, polypropylene etc. and ionomeric polyolefines.

Preferably such materials are used which have a sufficient permeability for $CO_2$ and other gases which are constantly produced as a result of the fruit's metabolism. In this respect high and low density polyethylene films have proven particularly useful. Appropriate fungicides in the above process have a good vapour phase activity without being too volatile. The group of antifungal imidazole and triazole derivatives has been found extremely useful in this respect. Preferred members within this group are for example:

| | |
|---|---|
| Imazalil: | 1-[2-(2,4-dichlorophenyl)-2-(2-propenyloxy)-ethyl]-1*H*-imidazole; |
| Triadimefon: | 1-(4-chlorophenoxy)-3,3-dimethyl-1-(1*H*-1,2,4-triazol-1-yl)-2-butanone; |
| Triadimenol: | 1-(4-chlorophenoxy)-3,3-dimethyl-1-(1*H*-1,2,4-triazol-1-yl)-2-butanol; |
| Fluotrimazole: | diphenyl(3-trifluoromethylphenyl)(1*H*-1,2,4-triazol-1-yl)methane; |
| BTS-40542: | *N*-[2-(2,4,6-trichlorophenoxy)ethyl]-*N*-propyl-1*H*-imidazole-1-carboxamide; |
| RH 2161: | α-butyl-α-phenyl-1*H*-imidazole-1-propanenitrile; |
| Biloxazol: | β-[(1,1'-biphenyl)-4-yloxy]-α-(1,1-dimethyl-ethyl)-1*H*-1,2,4-triazole-1-ethanol; |
| Dichlobutrazol: | 1-(2,4-dichlorophenyl)-4,4-dimethyl-2-(1*H*-1,2,4-triazol-1-yl)pentan-3-ol; |
| Propiconazole: | (±)-(*cis*+*trans*)-1-[(2-(2,4-dichlorophenyl)-4-propyl-1,3-dioxolan-2-yl]methyl)-1*H*-1,2,4-triazole; |
| Azaconazole: | 1-[[2-(2,4-dichlorophenyl)-1,3-dioxolan-2-yl]-methyl]-1*H*-1,2,4-triazole; |
| Etaconazole: | 1-[[2-(2,4-dichlorophenyl)-4-ethyl-1,3-dioxolan-2-yl]methyl]-1*H*-1,2,4-triazole. |

Of the above, imazalil, propiconazole, azaconazole and etaconazole are particularly preferred, the most preferred being imazalil.

Depending on the circumstances the concentration of the active substance in the thermoplastic material may vary within rather wide limits, e.g. from 0.01 to 3%, preferably from 0.05 to 1%. The fruits may be wrapped with the film or, preferably, they are seal-packaged therein. In general, the space left between the film and the fruit should be kept minimal. As a consequence it is preferable to pack the fruits individually.

After packing, at least part of the film is heated, preferably for a short time. Such heat treatment may be performed by keeping the packed fruits shortly in a hot environment or subjecting them temporarily to intense heat radiation. In any event such treatment should be kept short enough as to cause no damage to the fruits themselves. In a preferred embodiment part of the packaging material is heated by direct contact and most preferably this heating is at the same time intended for the sealing of the package which may be produced e.g. from sleeves or sheets of the thermoplastic film, which forms after sealing closed sacks, each preferably containing one fruit.

In a particularly preferred embodiment the fruits are individually packed in a film of an appropriate thermoplastic material, preferably low density polyethylene, which contains an effective concentration of the fungicide, the packing is heat-sealed and the packed fruit is subsequently subjected to more or less intense overall heating for a short time in order to cause shrinking of the plastic bag around the fruit. The shrinking operation is conveniently carried out by allowing the packed fruits to pass through a heat tunnel.

Although the process according to the invention is particularly suited for the conservation of harvested fruits, it may be used to prevent microbial, in particular fungal deterioration of food products for animal and human consumption in general. Apart from harvested fruits, such food products include but are not limited to cheese, especially hard cheese, processed fruits and vegetables, meat products, bread and other bakery products, pre-packed dishes and meals etc..

The beneficial effects obtained with the process according to the present invention are clearly evidenced by the following experiments:

Experiment I

Protection of oranges from decay caused by *Penicillium italicum* using high-density polyethylene film.

Commercially available oranges were washed with soap and thoroughly rinsed with running tap water. Each fruit was wounded on three sites by cutting out a thin slice of peel over a few square centimeters. The fruits were artificially inoculated by applying a suspension of conidia of *Penicillium italicum* on the wounds by means of a small brush. Immediately thereafter, the oranges were individually packed in bags of

**0 101 102**

high-density polyethylene (HDPE) of 15 μm. The bags were produced from sleeves with a width of 16.5 cm in flat form, and had a total length of 15 cm.. Half of the fruits were packed in HDPE in which imazalil was incorporated prior to extrusion at a concentration of 0.1%. The incorporation was performed by thoroughly mixing the active ingredient together with the molten polyethylene mass. The other half of the fruits were packed in identical polyethylene film except that it did not contain imazalil. Both with the treated and non-treated films two set-ups were tested: the HDPE-bags were either closed by means of scotch tape, or by heat-sealing. In the latter case a small industrial apparatus was used which heats a 3 mm broad band of the film for a short time (about 0.8 seconds). The rest of the experiment was run at room temperature. The experiment was terminated 9 days after inoculation. At that time the degree of decay around the wound and production of conidia were rated according to the following score system:

+++ heavy
++ moderate
+ starting
0 none

The results in the following table clearly show that the fruits packed in non-treated HDPE-film had decayed. The showed mycelia and conidia covering the whole wounded area. The fruits packed in bags of HDPE containing 0.1% of imazalil and closed with scotch tape were slightly less effected than those kept in untreated film: decay and production of conidia were somewhat decreased. The fruits kept in heat-sealed and treated HDPE-film showed no decay and no production of conidia.

TABLE I:
Effect of imazalil incorporated in HDPE at 0.1%.
Appearance of the fruits 9 days after artificial inoculation.

|  | Appearance of fruits | |
| --- | --- | --- |
| Treatment | Decay around the wound | Production of conidia |
| Non-treated HDPE/closed with scotch tape | +++ | +++ |
| Non-treated HDPE/closed by heat sealing | +++ | +++ |
| HDPE with 0.1% imazalil/closed with scotch tape | + | + |
| HDPE with 0.1% imazalil/closed by heat-sealing | 0 | 0 |

Experiment II
Protection of oranges from decay caused by *Penicillium italicum*, using low-density polyethylene (LDPE) film.

Oranges were handled, infected and heat-sealed in polyethylene bags following the same procedure as described in experiment I. The polyethylene bags used in this experiment were made of a 15 μm thick low-density polyethylene film. Half of the fruits were packed in LDPE film which contained 0.2% of imazalil and the other half in untreated film.

Evaluations were made 8, 11 and 18 days after inoculation. Per item 3 fruits with 3 inoculations each were used, giving a total of 9 inoculation sites. The results of the experiment are listed in table II.

TABLE II
Effect of imazalil incorporated in LDPE at 0.2% on mycelium formation and sporulation.

|  | Evaluation at indicated day after inoculation | | | | | | | | |
| --- | --- | --- | --- | --- | --- | --- | --- | --- | --- |
| Treatment | No. of infection sites free of mould | | | No. of infection sites with mycelium/no sporulation | | | No. of infection sites with sporulating mycelium | | |
|  | 8d. | 11d. | 18d. | 8d. | 11d. | 18d. | 8d. | 11d. | 18d. |
| Untreated LDPE film | 0 | 0 | 0 | 0 | 0 | 0 | 9 | 9 | 9 |
| LDPE film with 0.2% of imazalil | 4 | 1 | 0 | 5 | 8 | 9 | 0 | 0 | 0 |

4

**0 101 102**

## Claims

1. A method of protecting food products for animal or human consumption from fungal decay which comprises packing said food products in a film of an appropriate thermoplastic polymeric material wherein an effective amount of an imidazole or triazole fungicide is incorporated, characterized in that during or shortly after packing at least part of the packing film is heated.

2. A method according to claim 1 wherein said polymeric material is polyethylene.

3. A method according to any of claims 1 or 2 wherein part of the packing film is heated in such manner as to seal the packages.

4. A method according to any of claims 1 to 3 wherein the packing film is, after sealing of the packages, subjected to shrinking by the action of heat.

5. A method according to any of claims 1 to 4 wherein said food products are harvested fruits.

6. A method according to claim 5 wherein said fruits are packed individually.

7. A method according to any of claims 1 to 4 wherein said food product is cheese.

8. A method according to any of claims 1 to 7 wherein said fungicide is 1 - [2 - (2,4 - dichlorophenyl) - 2 - (2 - propenyloxy)ethyl] - 1*H* - imidazole.

9. A method according to any of claims 1 to 7 wherein said fungicide is (±) - (*cis+trans*) - 1 - [[2 - (2,4 - dichlorophenyl) - 4 - propyl - 1,3 - dioxolan - 2 - yl]methyl] - 1*H* - 1,2,4 - triazole.

10. A method according to any of claims 1 to 7 wherein said fungicide is 1 - [[2 - (2,4 - dichlorophenyl) - 1,3 - dioxolan - 2 - yl] - methyl] - 1*H* - 1,2,4 - triazole.

11. A method according to any of claims 1 to 7 wherein said fungicide is 1 - [[2 - (2,4 - dichlorophenyl) - 4 - ethyl - 1,3 - dioxolan - 2 - yl]methyl] - 1*H* - 1,2,4 - triazole.

## Patentansprüche

1. Verfahren zum Schutz von Nahrungsprodukten für den tierischen oder menschlichen Verzehr vor Pilzfäule, welches ein Verpacken des Nahrungsproduktes in eine Folie aus einem geeigneten thermoplastischen Polymermaterial, in welches eine wirksame Menge eines Imidazol- oder Triazolfungizids eingearbeitet worden ist, umfaßt, dadurch gekennzeichnet, daß während oder kurz nach dem Verpacken wenigstens ein Teil der Verpackungsfolie erwärmt wird.

2. Verfahren nach Anspruch 1, worin das Polymermaterial Polyethylen ist.

3. Verfahren nach einem der Ansprüche 1 oder 2, worin ein Teil der Verpackungsfolie derart erwärmt wird, daß die Verpackungen versiegelt werden.

4. Verfahren nach einem der Ansprüche 1 bis 3, worin die Verpackungsfolie nach dem Versiegeln der Verpackungen einem Schrumpfen durch Wärmeeinwirkung unterworfen wird.

5. Verfahren nach einem der Ansprüche 1 bis 4, worin die Nahrungsprodukte geerntete Früchte sind.

6. Verfahren nach Anspruch 5, worin die Früchte einzeln verpackt werden.

7. Verfahren nach einem der Ansprüche 1 bis 4, worin das Nahrungsprodukt Käse ist.

8. Verfahren nach einem der Ansprüche 1 bis 7, worin das Fungizid 1 - [2 - (2,4 - Dichlorphenyl) - 2 - (2 - propenyloxy)ethyl] - 1H - imidazol ist.

9. Verfahren nach einem der Ansprüche 1 bis 7, worin das Fungizid (±) - (*cis+trans*) - 1 - [[2 - (2,4 - Dichlorphenyl) - 4 - propyl - 1,3 - dioxolan - 2 - yl]methyl] - 1H - 1,2,4 - triazol ist.

10. Verfahren nach einem der Ansprüche 1 bis 7, worin das Fungizid 1 - [[2 - (2,4 - Dichlorphenyl) - 1,3 - dioxolan - 2 - yl)methyl] - 1H - 1,2,4 - triazol ist.

11. Verfahren nach einem der Ansprüche 1 bis 7, worin das Fungizid 1 - [[2 - (2,4 - Dichlorphenyl) - 4 - ethyl - 1,3 - dioxolan - 2 - yl]methyl] - 1H - 1,2,4 - triazol ist.

## Revendications

1. Un procédé de protection contre le flétrissement fongique de produits alimentaires pour la consommation animale ou humaine, qui comprend l'emballage desdits produits alimentaires dans une pellicule d'un matériau polymère thermoplastique approprié auquel une quantité efficace d'un fongicide de type imidazole ou triazole est incorporée, caractérisé en ce que, pendant l'emballage ou peu après, au moins une partie de la pellicule d'emballage est chauffée.

2. Un procédé selon la revendication 1 dans lequel ledit matériau polymère est un polyéthylène.

3. Un procédé selon l'une quelconque des revendications 1 ou 2 dans lequel une partie de la pellicule d'emballage est chauffée de façon à souder les emballages.

4. Un procédé selon l'une quelconque des revendications 1 à 3 dans lequel la pellicule d'emballage est, après soudage des emballages, soumise à une rétraction par action de la chaleur.

5. Un procédé selon l'une quelconque des revendications 1 à 4 dans lequel lesdits produits alimentaires sont des fruits récoltés.

6. Un procédé selon la revendication 5 dans lequel lesdits fruits sont emballés individuellement.

7. Un procédé selon l'une quelconque des revendications 1 à 4 dans lequel ledit produit alimentaire est un fromage.

5

8. Un procédé selon l'une quelconque des revendications 1 à 7 dans lequel ledit fongicide est le 1 - [2 - (2,4 - dichlorophényl) - 2 - (2 - propényloxy)éthyl] - 1*H* - imidazole.

9. Un procédé selon l'une quelconque des revendications 1 à 7 dans lequel ledit fongicide est le (±) - (*cis+trans*) - 1 - [[2 - (2,4 - dichlorophényl) - 4 - propyl - 1,3 - dioxolanne - 2 - yl]méthyl] - 1*H* - 1,2,4 - triazole.

10. Un procédé selon l'une quelconque des revendications 1 à 7 dans lequel ledit fongicide est le 1 - [[2 - (2,4 - dichlorophényl) - 1,3 - dioxolanne - 2 - yl]méthyl] - 1*H* - 1,2,4 - triazole.

11. Un procédé selon l'une quelconque des revendications 1 à 7 dans lequel ledit fongicide est le 1 - [[2 - (2,4 - dichlorophényl) - 4 - éthyl - 1,3 - dioxolanne - 2 - yl]méthyl] - 1*H* - 1,2,4 - triazole.